# EUROPEAN PATENT APPLICATION

(11) **EP 4 564 199 A1**
(43) Date of publication of application: **04.06.2025**
(21) Application number: 24204910.4
(22) Date of filing: 07.10.2024
(51) Int. Cl.: G06F 21/30, G06F 3/06, G06F 12/14, G06F 21/60, G06F 21/70, H04L 9/32, H04L 9/40, H04W 12/06, H04W 12/08

(54) **VEHICLE DATA ACCESS SYSTEM CONTROLLING ACCESS TO VEHICLE DATA USING SMART KEY**

(30) Priority: 30.11.2023 KR 20230170242
(71) Applicant: Samsung Electronics Co., Ltd., Suwon-si, Gyeonggi-do 16677 (KR)
(72) Inventor: JO, Seongchan, Suwon-si, 16677 (KR); LEE, Myeongjong, Suwon-si, 16677 (KR); KIM, Hyungsup, Suwon-si, 16677 (KR); CHU, Younsung, Suwon-si, 16677 (KR)
(74) Representative: Marks & Clerk LLP

(57) **Abstract**

Disclosed is a vehicle data access system comprising a smart key module configured to receive a signal from a smart key, the signal associated with vehicle data; a vehicle control module configured to be associated with at least one of vehicle management and driving convenience; and a storage module configured to store the vehicle data generated by the vehicle control module and control access to the vehicle data according to control of the smart key module. The smart key module is configured to allow access to the vehicle data of the vehicle control module, stored in the storage module through an authentication operation of the smart key.

## Description

### BACKGROUND

Various example embodiments described herein relate to a vehicle control system, and more specifically, to a vehicle data access system that controls access to vehicle data using a smart key.

A vehicle currently sold on the market may perform various driver convenience functions using one or more of sensor modules, infotainment modules, navigation modules, and communication modules. The vehicle may generate and store large amounts of data to perform a variety of functions. The vehicle may provide personalized services using large amounts of data.

However, large amounts of data generated in the vehicle are distributed and stored in various modules within the vehicle. Modules within each vehicle manage data independently. As a result, there are many difficulties in managing vehicle data. Further, management complexity is increasing. If data erase operation and/or security management is not performed properly, there is a risk that the user's personal information or sensitive vehicle data may be leaked. In particular, when the vehicle is sold and/or scrapped, previous data may remain without deleting the vehicle data.

### SUMMARY

Various example embodiments may provide a vehicle data access system that may safely manage vehicle data using a smart key.

According to some example embodiments, a vehicle data access system comprises: a smart key module configured to receive a signal from a smart key, the signal associated with accessing vehicle data; and a storage module configured to control access to the vehicle data according to a control of the smart key module. The smart key module is configured to access to the vehicle data stored in the storage module through an authentication operation of the smart key.

Alternatively or additionally according to various example embodiments, a vehicle data access system comprises: a smart key module configured to receive a signal from a smart key, the signal associated with accessing vehicle data; a vehicle control module configured to be associated with at least one of vehicle management and driving convenience; and a storage module configured to store the vehicle data generated by the vehicle control module and to control access to the vehicle data according to control of the smart key module. The smart key module is configured to allow access to the vehicle data of the vehicle control module, stored in the storage module through an authentication operation of the smart key.

Alternatively or additionally according to various example embodiments, a vehicle data access system comprises: a smart key module configured to receive a signal to access vehicle data from the smart key; and a vehicle control module configured to be associated with at least one of vehicle management and driving convenience. The smart key module is configured to allow access to vehicle data stored in the vehicle control module through an authentication operation of the smart key.

At least some of the above and other features of the invention are set out in the claims.

### BRIEF DESCRIPTION OF THE FIGURES

The above and other objects and features of inventive concepts will become apparent by describing in detail embodiments thereof with reference to the accompanying drawings.
FIG. 1 is a diagram illustrating some example embodiments of a vehicle system using a smart key.
FIG. 2 is a block diagram illustrating some example embodiments of a vehicle control system mounted on the vehicle shown in FIG. 1.
FIG. 3 is a block diagram illustrating a vehicle system according to an embodiment of the present disclosure.
FIGS. 4 to 6 are diagrams illustrating some example embodiments of operations for controlling data access of the vehicle data access system shown in FIG. 3.
FIG. 7 is a block diagram illustrating the vehicle data access system shown in FIG. 3 in more detail.
FIG. 8 is a block diagram illustrating a vehicle control module mounted on the vehicle data access system shown in FIG. 7.
FIG. 9 is a block diagram illustrating the operation method of the vehicle data access system shown in FIG. 7.
FIGS. 10 to 13 are block diagrams illustrating an operation method of a vehicle data access system according to some example embodiments of the present disclosure.
FIG. 14 is a state diagram illustrating some example embodiments of a state machine of the vehicle data access system shown in FIG. 7.
FIGS. 15 and 16 are flowcharts illustrating example embodiments of the password setting operation shown in FIG. 14.
FIGS. 17 and 18 are flowcharts illustrating some example embodiments of the unlock operation shown in FIG. 14.
FIGS. 19 and 20 are flowcharts illustrating some example embodiments of the crypto erase operation shown in FIG. 14.
FIG. 21 is a conceptual diagram illustrating some example embodiments of the smart key shown in FIG. 3.
FIG. 22 is a block diagram illustrating an example of implementing a storage module (e.g. the storage module shown in any of FIGS. 2-9 and 21) as a solid state drive (SSD).

### DETAILED DESCRIPTION

Below, example embodiments of the present disclosure will be described in detail and clearly to such an extent that an ordinary one in the art easily implements the inventive concepts.

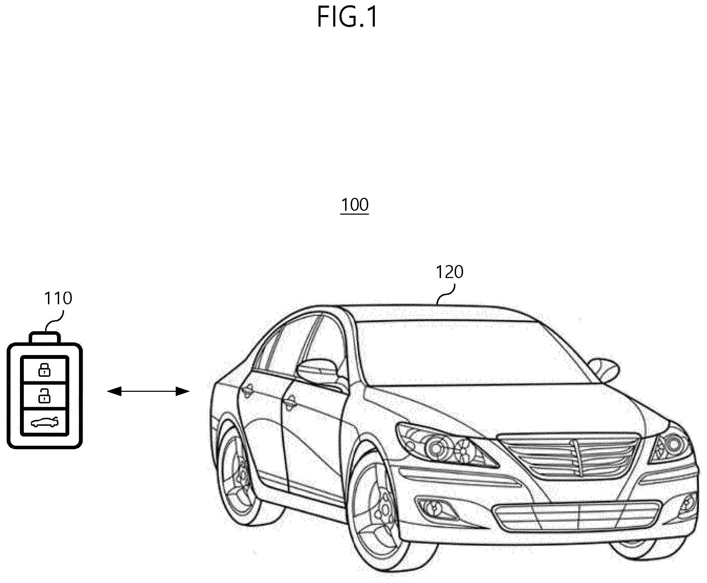

FIG. 1 is a diagram illustrating some example embodiments of a vehicle system using a smart key. Referring to FIG. 1, the vehicle system 100 may include a smart key 110 and a vehicle 120.

The smart key 110 may transmit and/or receive data wirelessly. The smart key 110 may send a specific command to the vehicle 120. As an example, the specific command may include one or more of a locking command, an unlocking command, a trunk opening command, and an engine start command. The vehicle 120 may receive the specific command from the smart key 110 and perform an operation according to the received specific command. In some example embodiments, the smart key 110 may be or may include or correspond to a fob; example embodiments are not limited thereto.

The vehicle 120 may be or may include a gasoline-based vehicle having an internal combustion engine, or an electric vehicle operating on battery power, or a hybrid-electric vehicle; example embodiments are not limited thereto. The vehicle may be a personal vehicle such as a coupe or a sedan or a sport-utility vehicle or a minivan or a van or a truck; alternatively or additionally the vehicle may be a vehicle for use in industrial applications such as but not limited to mining or agriculture or construction; example embodiments are not limited thereto.

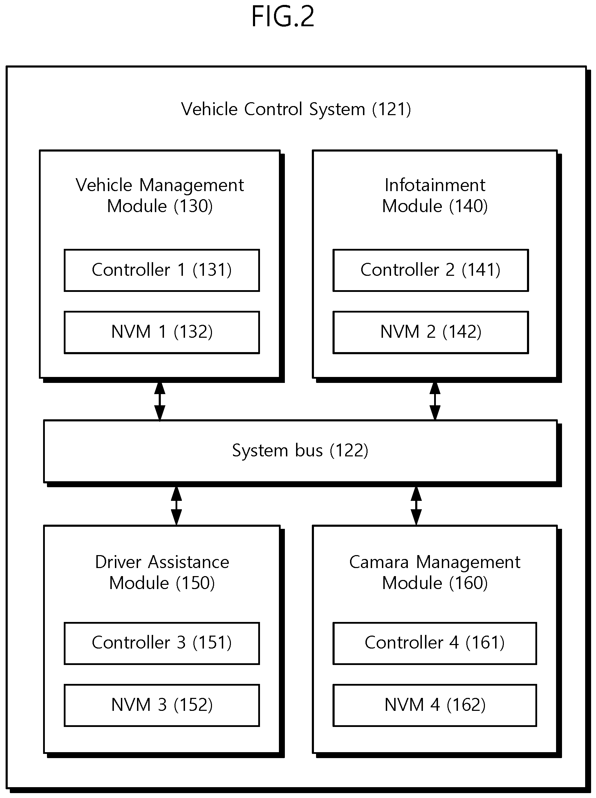

FIG. 2 is a block diagram illustrating some example embodiments of a vehicle control system mounted on the vehicle shown in FIG. 1. Referring to FIG. 2, the vehicle control system 121 may include a system bus 122, a vehicle management module 130, an in-vehicle infotainment (IVI) module 140, a driver assistance module 150, and a camera management module 160.

The vehicle management module 130 may manage devices installed in (e.g. inside of and/or wired to) the vehicle 120. The vehicle management module 130 may manage one or more devices in the vehicle, such as one or more of lighting devices, steering devices, braking devices, and battery devices. The vehicle management module 130 may be connected to the infotainment module 140, the driver assistance module 150, and the camera management module 160 through the system bus 122.

The vehicle management module 130 may include a first controller 131 and a first NVM 132. The first controller 131 may include a vehicle management control unit and may manage one or more devices in the vehicle, such as one or more of lighting devices, steering devices, braking devices, and battery devices according to surrounding and driving conditions. The first NVM 132 may include a vehicle management storage unit and store data generated by the vehicle management control unit.

The infotainment module 140 may provide the user with information necessary for or useful for driving and/or using the vehicle 120. As an example, the infotainment module 140 may include multimedia functions such as one or more of route guidance, vehicle status information, games, music, and video necessary for driving and using the vehicle 120.

The infotainment module 140 may include a second controller 141 and a second NVM 142. The second controller 141 may include an infotainment control unit and may generate data according to vehicle operation and/or of use of the vehicle 120. The second NVM 142 may include an infotainment storage unit and may store data generated by the infotainment control unit.

The driver assistance module 150 may support one or more users' driving. The driver assistance module 150 may support functions such as one or more of a forward collision prevention (or reduction) function, lane departure prevention (or reduction) assistance function, safe exit assistance function, driver attention warning function, rear and/or side monitoring function, lane maintenance assistance function, surround view monitoring function, rear cross-traffic collision prevention (or reduction) function, and parking assistance function.

The driver assistance module 150 may include a third controller 151 and a third NVM 152. The third controller 151 may include a driver assistance control unit and may generate various data for driver assistance. The third NVM 152 may include a driver assistance storage unit and, in some example embodiments, may store data generated by the driver assistance control unit.

The camera management module 160 may manage one or more cameras installed in the vehicle 120. For example, cameras installed in the vehicle 120 may include a blind spot check camera and/or a black box camera. The camera management module 160 may include a fourth controller 161 and a fourth NVM 162. The fourth controller 161 may include a camera management control unit and may capture surrounding situations while driving, stopping, and/or parking. The fourth NVM 162 may include a camera management storage unit and may store surrounding situations captured by the camera management control unit.

The vehicle control system 121 may include various modules for vehicle operation and/or for driver convenience. The vehicle data may be distributed and may be stored in multiple modules within the vehicle 120. Each module may manage vehicle data independently. As a result, vehicle data cannot be managed efficiently and in some cases vehicle data may be leaked.

The vehicle data access system according to various example embodiments may store and manage vehicle data generated by various modules in the vehicle 120 in one storage module. According to some example embodiments, the management efficiency of vehicle data may be improved, and personal information leakage may be prevented or reduced in likelihood of occurrence and/or in impact from occurrence, because vehicle data may be erased or destroyed in batches.

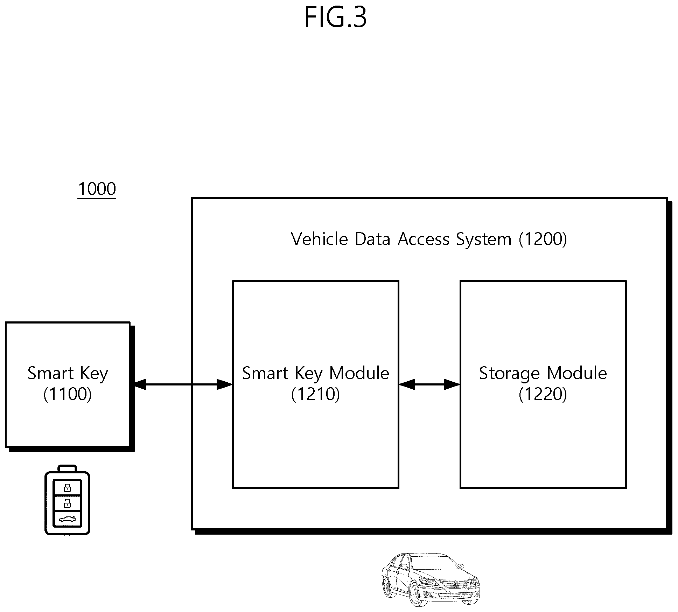

FIG. 3 is a block diagram illustrating a vehicle system according to various example embodiments. Referring to FIG. 3, the vehicle system 1000 may include a smart key 1100 and a vehicle data access system 1200. The vehicle data access system 1200 may include a smart key module 1210 and a storage module 1220.

The smart key module 1210 may perform data communication with the smart key 1100. The smart key module 1210 may receive unique code information from the smart key 1100. The smart key module 1210 may authenticate the smart key 1100 using unique code information. When the smart key 1100 is authenticated, the smart key module 1210 may perform operations to control data access. Here, operations for controlling data access may include a password setting operation, an unlock operation, and a cryptographic erase (crypto erase) operation.

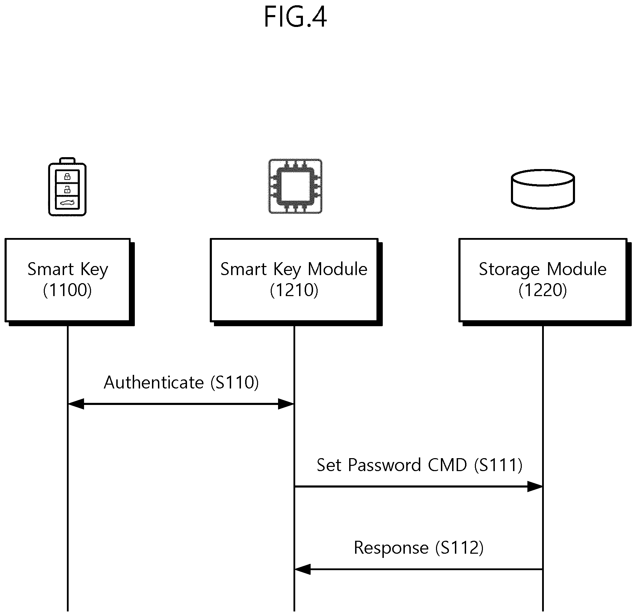

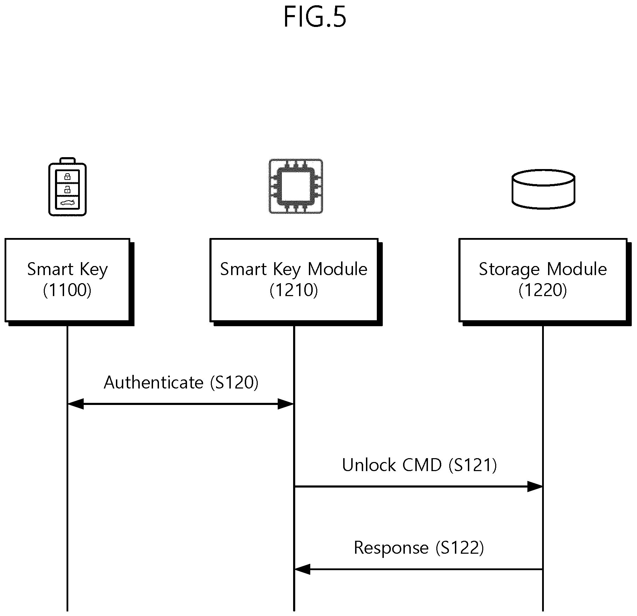

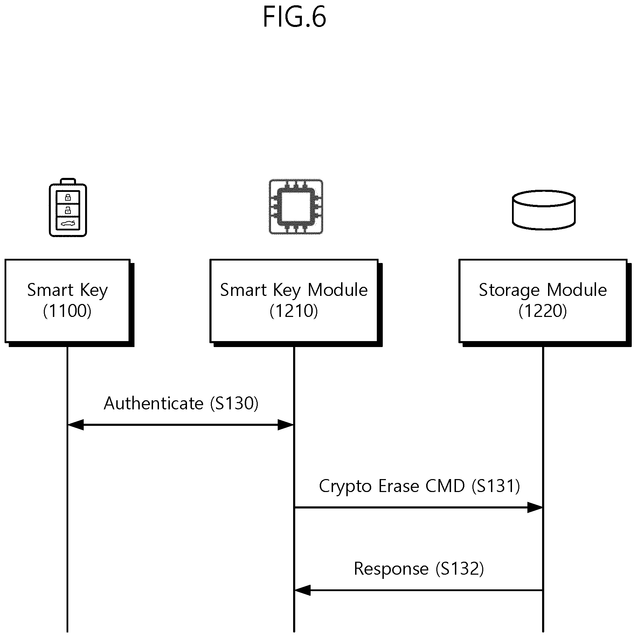

FIGS. 4 to 6 are diagrams illustrating some example embodiments of operations for controlling data access of the vehicle data access system shown in FIG. 3. FIG. 4 shows a password setting operation, FIG. 5 shows an unlock operation, and FIG. 6 shows a crypto erase operation.

Referring to FIG. 4, the smart key module 1210 may perform a mutual authentication operation with the smart key 1100 (S110). If authentication is successful, the smart key module 1210 may transmit a command for setting a password to the storage module 1220 (S111). The command may include the password. The storage module 1220 may generate a key based on the password. They key may be used in a future operation to verify a received password. The smart key module 1210 may receive a response from the storage module 1220 (S112) (e.g. indicating success or failure of the unlock operation). The smart key module 1210 may encrypt and store the password.

Referring to FIG. 5, the smart key module 1210 may perform a mutual authentication operation with the smart key 1100 (S120). If authentication is successful, the smart key module 1210 may decrypt the encrypted and stored password and transmit an unlock command to the storage module 1220 (S121). The unlock command may include the password. The storage module 1220 may verify whether the password is correct and, if so, move to an unlocked mode (e.g. allow access to data stored in the storage module 1220). The smart key module 1210 may receive a response from the storage module 1220 (S122) (e.g. indicating success or failure of the unlock operation).

Referring to FIG. 6, the smart key module 1210 may perform a mutual authentication operation with the smart key 1100 (S130). If authentication is successful, the smart key module 1210 may provide a crypto erase command to the storage module 1220 (S131). The storage module 1220 may erase a cryptographic key stored in the storage module 1220 in response to the command. The smart key module 1210 may receive a response from the storage module 1220 (S132) (e.g. indicating success or failure of the crypto erase operation). The smart key module 1210 may erase the encrypted password.

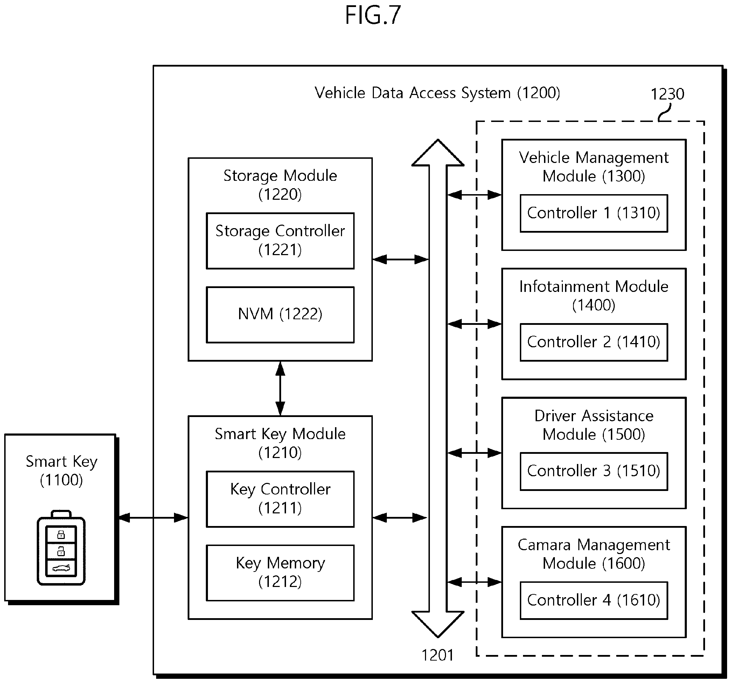

FIG. 7 is a block diagram illustrating the vehicle data access system shown in FIG. 3 in more detail. Referring to FIG. 7, the vehicle data access system 1200 may include a system bus 1201, a smart key module 1210, a storage module 1220, and a vehicle control module 1230. The vehicle control module 1230 may include a vehicle management module 1300, an infotainment module 1400, a driver assistance module 1500, and a camera management module 1600.

The smart key module 1210 may be connected to the storage module 1220 through the system bus 1201. The system bus 1201 may be a wired and/or a wireless bus. Alternatively, the smart key module 1210 may be directly connected to the storage module 1220. The smart key module 1210, the storage module 1220, the vehicle management module 1300, the infotainment module 1400, the driver assistance module 1500, and the camera management module 1600 may be connected to each other through the system bus 1201 in a wired and/or wireless manner.

The smart key module 1210 may perform data communication with the smart key 1100. The smart key module 1210 may receive unique code information from the smart key 1100. The smart key module 1210 may authenticate the validity of the smart key 1100 using unique code information.

When the validity of the smart key 1100 is authenticated, the smart key module 1210 may execute a command to control data access. The smart key module 1210 may transmit commands for controlling data access to the system bus 1201. As an example, commands for controlling data access may include one or more of the password setting command, the unlocking command, and the crypto erase command.

The smart key module 1210 may include a key controller 1211 and a key memory 1212. The key controller 1211 may perform operations to control data access. As an example, operations for using the vehicle 120 may include one or more of the password setting operation, the storage unlock operation, the crypto erase operation, etc.

The key controller 1211 may control the storage module 1220 to perform the password setting operation. The key controller 1211 may provide a password and a password setting command to the storage module 1220 to perform the password setting operation. Additionally, the key controller 1211 may receive a response from the storage module 1220 and complete the password setting operation.

The key controller 1211 may control the storage module 1220 to perform the storage unlock operation. The key controller 1211 may provide a password and unlock command to the storage module 1220 to perform the storage unlock operation. The key controller 1211 may receive a response from the storage module 1220 and complete the storage unlock operation.

The key controller 1211 may control the storage module 1220 to perform a cryptographic erase operation. The key controller 1211 may provide a crypto erase command to the storage module 1220 to perform a crypto erase operation. The key controller 1211 may receive a response from the storage module 1220 and complete the crypto erase operation.

The key memory 1212 may store an encryption code. As an example, the encryption code may be an encrypted password. The key memory 1212 may store the encrypted password. The key memory 1212 may be a semiconductor memory. The key memory 1212 may be or may include volatile memory and/or non-volatile memory (NVM).

The storage module 1220 may be directly connected to the smart key module 1210 or may be connected through the system bus 1201. The storage module 1220 may manage and store information necessary for driving and using the vehicle 120. The storage module 1220 may include a storage controller 1221 and an NVM 1222.

The storage controller 1221 may perform a password setting operation, a storage unlock operation, and a crypto erase operation. The storage controller 1221 may create, erase, wrap, or unwrap an encryption key. As an example, the encryption key may be a Key Protection Key, a Key Encryption Key, and/or a Data Encryption Key; example embodiments are not limited thereto.

The storage controller 1221 may perform the password setting operation. The storage controller 1221 may receive a password and a password setting command from the smart key module 1210. The storage controller 1221 may generate a response to the password setting command. The storage controller 1221 may provide a response to the smart key module 1210 through the system bus 1201.

The storage controller 1221 may perform the storage unlock operation. The storage controller 1221 may receive a password and unlock command from the smart key module 1210. The storage controller 1221 may generate a response to the storage unlock command. The storage controller 1221 may provide a response to the smart key module 1210 through the system bus 1201.

The storage controller 1221 may perform the crypto erase operation. The storage controller 1221 may receive the crypto erase command from the smart key module 1210. The storage controller 1221 may generate a response to the crypto erase command. The storage controller 1221 may provide a response to the smart key module 1210 through the system bus 1201.

The NVM 1222 may store information necessary for or useful for operations of the vehicle data access system 1200. For example, the NVM 1222 may be or may include (or be included in) a storage medium based on a flash memory. The NVM 1222 may store a Key Encryption Key and a Data Encryption Key. The NVM 1222 may store user data. As an example, user data may refer to all data required for or useful for the vehicle data access system 1200 to provide various customized services to users. The NVM 1222 may encrypt and store user data.

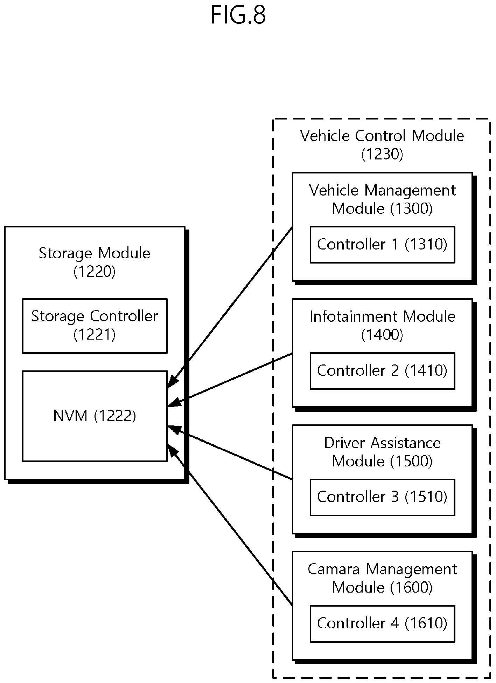

FIG. 8 is a block diagram illustrating a vehicle control module mounted on the vehicle data access system shown in FIG. 7. Referring to FIG. 8, the storage module 1220 may receive data from the vehicle control module 1230 and store it in the NVM 1222. The storage controller 1221 may control data input from the vehicle control module 1230 to be stored in the NVM 1222.

The vehicle management module 1300 may manage devices installed in the vehicle 120. The devices may include one or more vehicle driving systems (e.g. for driving the vehicle). The vehicle management module 1300 may manage one or more of lighting devices, steering devices, braking devices, entertainment devices, navigation services, and battery devices. The vehicle management module 1300 may include a first controller 1310. The first controller 1310 may be a vehicle management control unit. The first controller 1310 may manage one or more of lighting devices, steering devices, braking devices, entertainment devices, navigation services, and battery devices according to surrounding situation and driving situation. The NVM 1222 may store data required for the operation of the vehicle management module 1300 and/or vehicle management data generated by the vehicle management module 1300.

The infotainment module 1400 may provide the user with information necessary for or useful for driving and using the vehicle 120. As an example, information necessary for driving and using the vehicle 120 may include multimedia functions such as one or more of route guidance function, vehicle status guidance function, games, music, and video.

The infotainment module 1400 may include a second controller 1410. The second controller 1410 may be an infotainment control unit. The second controller 1410 may receive information necessary for driving or useful for and using the vehicle 120 from the storage module 1220. The second controller 1410 may generate data necessary for or useful for driving and using the vehicle 120. The second controller 1410 may provide the generated data to the storage module 1220. The NVM 1222 may store data required for or useful for the operation of the infotainment module 1400 and/or infotainment data generated by the infotainment module 1400.

The driver assistance module 1500 may support the user's driving. The driver assistance module 1500 may support functions such as one or more of a forward collision prevention (or reduction) function, lane departure prevention (or reduction) assistance function, safe exit assistance function, driver attention warning function, rear and/or side monitoring function, lane maintenance assistance function, surround view monitoring function, rear cross-traffic collision prevention (or reduction) function, and parking assistance function.

The driver assistance module 1500 may include a third controller 1510. The third controller 1510 may be driver assistance control unit. The third controller 1510 may receive information necessary for or useful for driving assistance from the storage module 1220. The third controller 1510 may generate data necessary for or useful for driver assistance. The third controller 1510 may provide the generated data to the storage module 1220. The NVM 1222 may store data required for or useful for the operation of the driver assistance module 1500 and/or driver assistance data generated by the driver assistance module 1500.

The camera management module 1600 may manage cameras installed in the vehicle 120. As an example, cameras installed in the vehicle 120 may include a blind spot check camera and a black box camera. The camera management module 1600 may include a fourth controller 1610. The fourth controller 1610 may be a camera management control unit. The fourth controller 1610 may capture surrounding situations while driving, stopping, and parking. The fourth controller 1610 may provide captured surrounding situation information to the storage module 1220. The NVM 1222 may store data required for or useful for the operation of the camera management module 1600 and/or camera management data generated by the camera management module 1600.

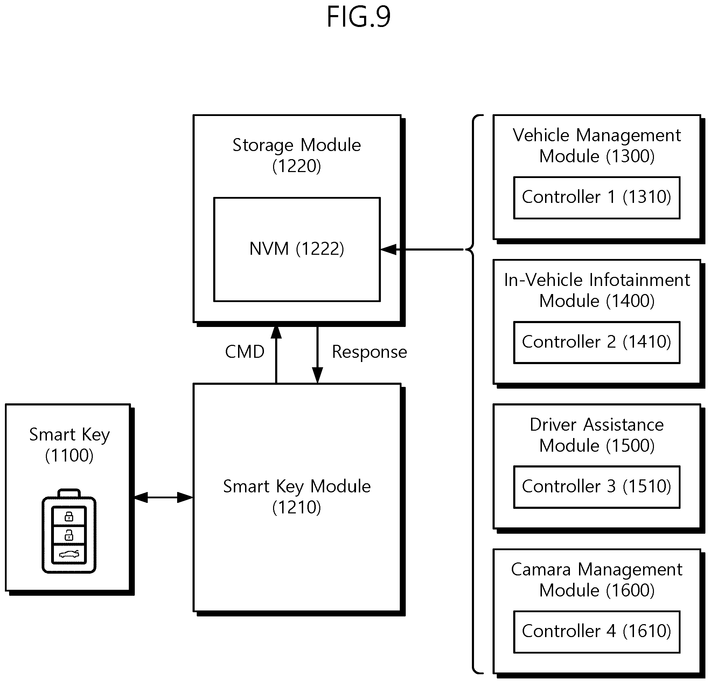

FIG. 9 is a block diagram illustrating the operation method of the vehicle data access system shown in FIG. 7. Referring to FIG. 9, the storage module 1220 may receive data from the vehicle management module 1300, the infotainment module 1400, the driver assistance module 1500, and the camera management module 1600. The storage module 1220 may store data in the NVM 1222.

The smart key module 1210 may perform a mutual authentication operation with the smart key 1100. When the validity of the smart key 1100 is authenticated, the smart key module 1210 may provide commands for controlling data access to the storage module 1220. The commands for controlling data access may include one or more of a password setting command, a storage unlock command, and a crypto erase command. The smart key module 1210 may receive a response corresponding to the commands CMD from the storage module 1220.

The storage module 1220 may perform the password setting operation, the storage unlock operation, and/or the crypto erase operation based on the received commands CMD. The storage module 1220 may generate, erase, encrypt, decrypt, wrap or unwrap encryption keys. The storage module 1220 may manage data input from the vehicle management module 1300, infotainment module 1400, driver assistance module 1500, and camera management module 1600. The storage module 1220 may store data in the NVM 1222.

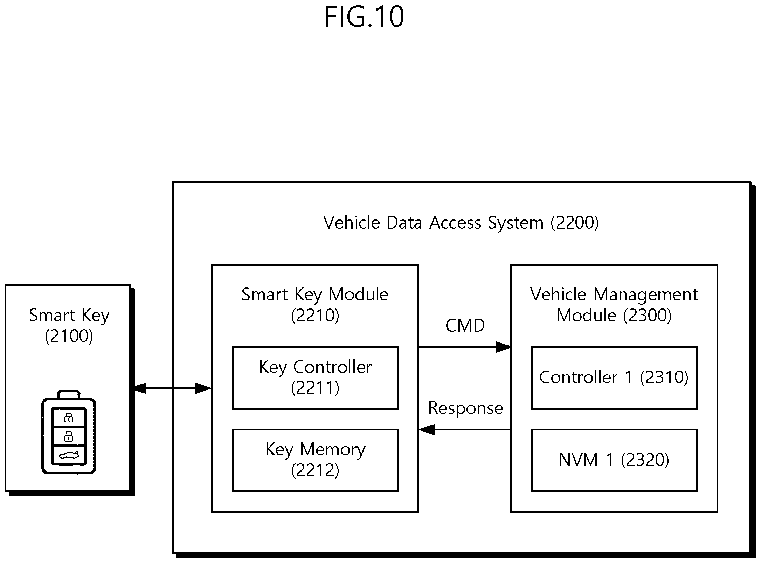

FIGS. 10 to 13 are block diagrams illustrating an operation method of a vehicle data access system according to some example embodiments of the present disclosure. Referring to FIGS. 10 to 13, the vehicle data access system 2200 may include a smart key module 2210, a vehicle management module 2300, an infotainment module 2400, a driver assistance module 2500, and a camera management module 2600.

The smart key module 2210 may perform a mutual authentication operation with the smart key 2100. The smart key module 2210 may receive unique code information from the smart key 2100. The smart key module 2210 may authenticate the validity of the smart key 2100 using unique code information. When the validity of the smart key 2100 is authenticated, the smart key module 2210 may perform an operation to control data access.

Referring to FIG. 10, the vehicle management module 2300 may include a first controller 2310 and a first NVM 2320. The first controller 2310 may be or may include, or be included in, a vehicle management control unit. The first NVM 2320 may be or may include, or be included in, a vehicle management storage unit. The first controller 2310 may manage one or more of lighting devices, steering devices, braking devices, and battery devices according to surrounding condition and driving condition. The first NVM 2320 may store data required for or useful for the operation of the vehicle management module 2300 and/or vehicle management data generated by the vehicle management module 2300.

The smart key module 2210 may provide commands to control data access to the vehicle management module 2300. The commands for controlling data access may include one or more of a password setting command, a storage unlock command, and a crypto erase command. The vehicle management module 2300 may perform one or more of a password setting operation, a storage unlock operation, and a crypto erase operation. The smart key module 2210 may receive a response corresponding to the command CMD from the vehicle management module 2320.

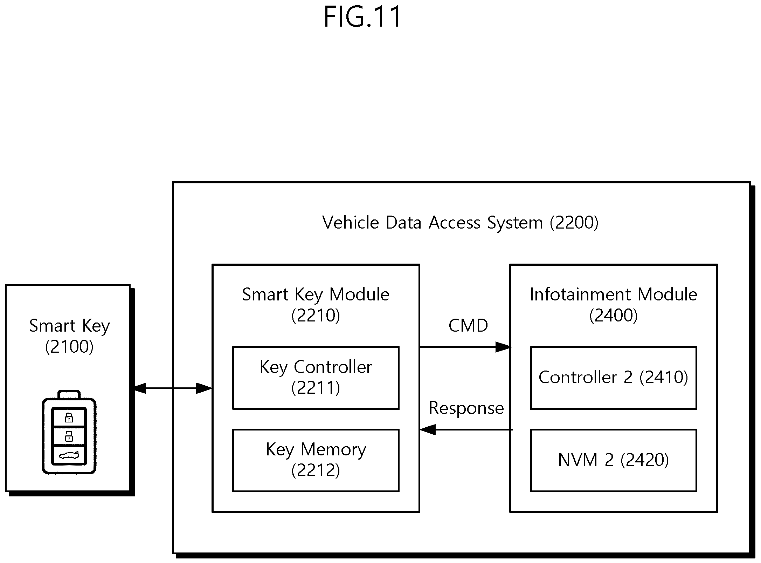

Referring to FIG. 11, the infotainment module 2400 may include a second controller 2410 and a second NVM 2420. The second controller 2410 may be an infotainment control unit. The second NVM 2420 may be an infotainment storage unit. The second controller 2410 may generate data necessary for or useful for driving and using the vehicle 120. The second controller 2410 may provide the generated data to the second NVM 2420. The second NVM 2420 may store data required for or useful for the operation of the infotainment module 2400 and/or infotainment data generated by the infotainment module 2400.

The smart key module 2210 may provide commands to control data access to the infotainment module 2400. The commands for controlling data access may include one or more of a password setting command, storage unlock command, and a crypto erase command. The infotainment module 2400 may perform one or more of a password setting operation, a storage unlock operation, and a crypto erase operation. The smart key module 2210 may receive a response corresponding to the command CMD from the infotainment module 2400.

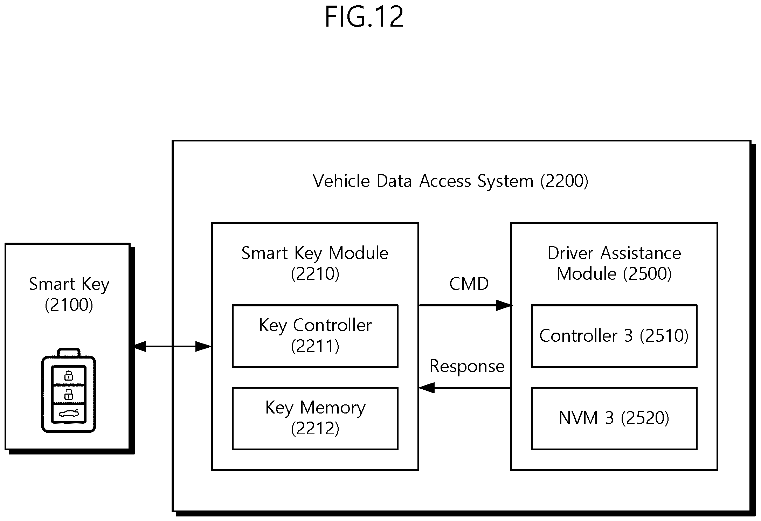

Referring to FIG. 12, the driver assistance module 2500 may include a third controller 2510 and a third NVM 2520. The third controller 2510 may be a driver assistance control unit. The third NVM 2520 may be a driver assistance storage unit. The third controller 2510 may generate data necessary for or useful for driver assistance. The third controller 2510 may provide the generated data to the third NVM 2520. The driver assistance storage unit 2520 may store data required for or useful for the operation of the driver assistance module 2500 and/or driver assistance data generated by the driver assistance module 2500.

The smart key module 2210 may provide commands to control data access to the driver assistance module 2500. The commands for controlling data access may include a password setting command, a storage unlock command, and a crypto erase command. The driver assistance module 2500 may perform one or more of a password setting operation, a storage unlock operation, and a crypto erase operation. The smart key module 2210 may receive a response corresponding to the command CMD from the driver assistance module 2500.

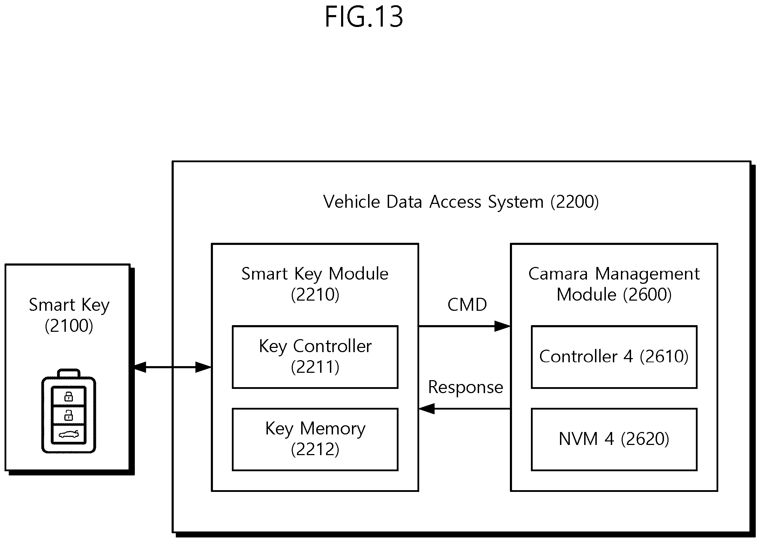

Referring to FIG. 13, the camera management module 2600 may include a fourth controller 2610 and a fourth NVM 2620. The fourth controller 2610 may be a camera management control unit. The fourth NVM 2620 may be a camera management storage unit. The fourth controller 2610 may capture surrounding situations while performing one or more of driving, stopping, and parking. The fourth controller 2610 may provide captured surrounding situation information to the fourth NVM 2620. The fourth NVM 2620 may store data required for or useful for the operation of the camera management module 2600 and/or camera management data generated by the camera management module 2600.

The smart key module 2210 may provide commands to control data access to the camera management module 2600. The commands for controlling data access may include one or more of a password setting command, a storage unlock command, and a crypto erase command. The camera management module 2600 may perform one or more of a password setting operation, a storage unlock operation, and a crypto erase operation. The smart key module 2210 may receive a response corresponding to the command CMD from the camera management module 2600.

The operating method of the vehicle data access system 2200 described above may include the vehicle management module 2300, the infotainment module 2400, the driver assistance module 2500, and the camera management module 2600 shown in FIGS. 10 to 13. The operating method of the vehicle data access system 2200 according to various example embodiments may be applied to all other modules inside the vehicle 120 in addition to these.

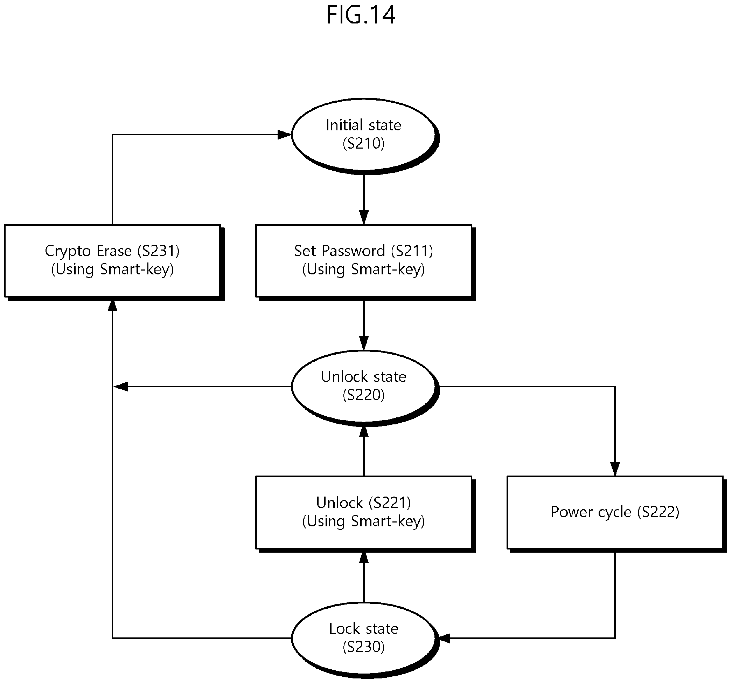

FIG. 14 is a state diagram illustrating some example embodiments of a state machine of the vehicle data access system shown in FIG. 7. The key controller 1211 of the smart key module 1210 may drive the state machine. The state machine may include states and/or operations.

The states may include an initial state (S210), an unlock state (S220), and a lock state (S230). The operations may include a password setting operation (S211), a unlock operation (S221), a power cycle (S222), and a crypto erase operation (S231). The smart key module 1210 may control states and/or operations that occur between the smart key module 1210 and the storage module 1220 using the state machine.

The initial state (S210) may be or correspond to a first state that starts the operation of the state machine. The initial state (S210) may be changed to the unlock state (S220) through the password setting operation (S211). After the smart key authentication process is completed through the initial password setting operation, the unlock state (S220) may proceed automatically.

The password setting operation (S211) is an operation to change from the initial state (S210) to the unlock state (S220). The smart key module 1210 may set a password shared by the smart key module 1210 and the storage module 1220 and encrypt the set password. The password (e.g. the encrypted password) may be stored by the smart key module 1210. The storage module 1220 may use the password to create one or more encryption keys, which can be used by the storage module 1220 to validate a future received password. The password setting operation (S211) may be performed through a special operation. For example, the special operation may include inputting a specific location on the screen and/or entering a key such as a predefined key.

The unlock state (S220) may be or may correspond to a state in which the vehicle data access system 1200 may access the storage module 1220. The unlock state (S220) may be changed from the initial state (S210) through the password setting operation (S211) or from the lock state (S230) through the unlock operation (S221).

The unlock operation (S221) may be an operation to change from the lock state (S230) to the unlock state (S220). The unlock operation (S221) may decrypt the password and encrypted key using the smart key 1100. The password may be sent by the smart key module 1210 to the storage module 1220. The storage module 1220 may determine whether the password is correct (e.g. whether a key generated based on the password can be used to successfully decrypt data stored in the storage module 1220) and, if so, the storage module 1220 may move to the unlocked state S220. The unlock operation (S221) may complete unlock by determining whether or not power is applied to the storage module 1220.

The lock state (S230) may be or correspond to a state in which the vehicle data access system 1200 cannot access the storage module 1220. The lock state (S230) may be changed from the unlock state (S220) through a power cycle (S222).

The power cycle (S222) may be an operation of changing from the unlock state (S220) to the lock state (S230). The power cycle (S222) may be an operation of turning the power off and on. The unlock state (S220) may be changed to the lock state (S230) after going through a power cycle (S222) in which the power is turned off and then turned on again.

The crypto erase operation (S231) may be an operation to change from the unlock state (S220) or the lock state (S230) to the initial state (S210). The crypto erase operation (S231) may erase the password, encrypted key, and user data. The crypto erase operation (S231) may be performed through a special operation. For example, the special operation may include inputting a specific location on the screen or entering a predefined key.

After, such as immediately after performing the smart key authentication operation, the storage module 1220 may not be powered on. However, as time passes after smart key authentication, the storage module 1220 may be powered on at any time. The smart key module 1210 may detect that the storage is powered on and unlock the storage module 1220 after the storage module 1220 is turned on.

If the storage module 1220 is turned on during smart key authentication, the storage module 1220 may be unlocked, e.g., immediately unlocked without any further input. If the storage module 1220 is not powered on, the smart key module 1210 may unlock the storage module 1220 after powering it on.

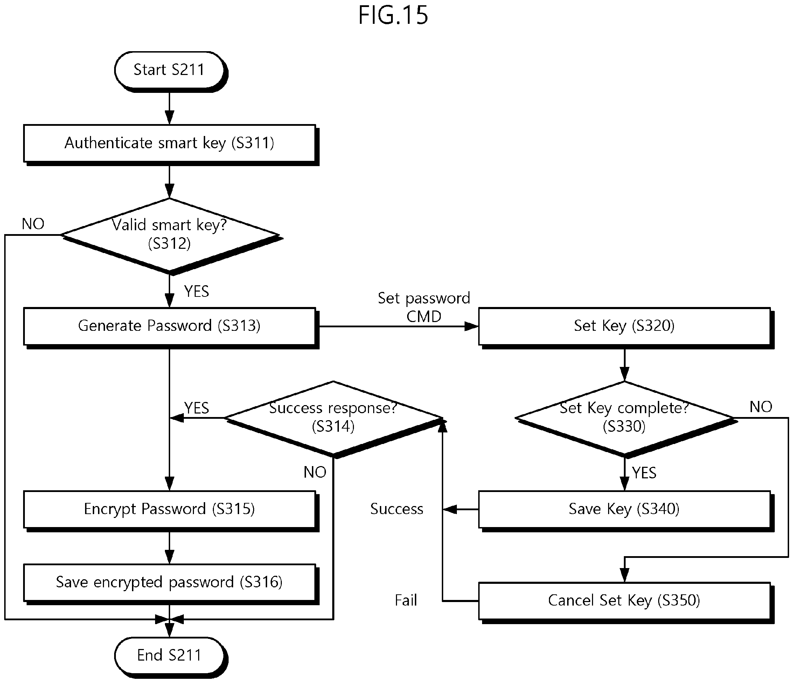

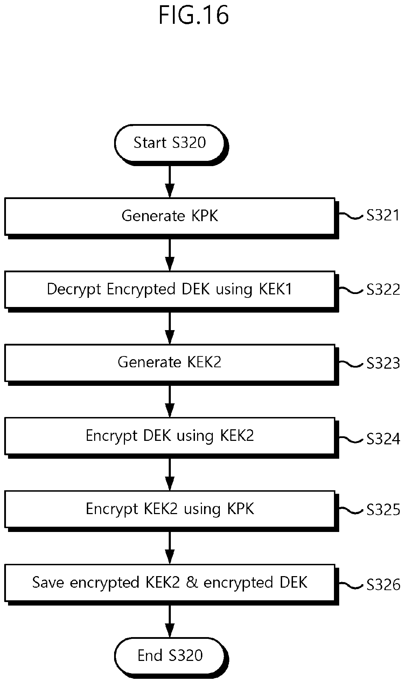

FIGS. 15 and 16 are flowcharts illustrating example embodiments of the password setting operation shown in FIG. 14. The smart key module 1210 and the storage module 1220 may perform the password setting operation (S211) using the smart key 1100. when the password setting operation is completed, the state of the state machine may be changed from the initial state (S210) to the unlock state (S220).

In operation S311, the smart key module 1210 may authenticate the validity of the smart key 1100. In operation S312, if the smart key 1100 is not valid (NO), the smart key module 1210 may end the password setting operation (S211). If the smart key 1100 is valid (YES), the smart key module 1210 may perform operation S313.

In operation S313, the smart key module 1210 may generate a password. The smart key module 1210 may transmit the generated password and password setting command (Set password CMD) to the storage module 1220.

In operation S320, the storage module 1220 may receive the password and the password setting command (Set password CMD) from the smart key module 1210. The storage module 1220 may perform an operation to set keys, that is, a set key operation.

Referring to FIG. 16, the storage module 1220 may perform the set key operation (S320). The storage module 1220 may set keys for data encryption by performing the set key operation (S320). The storage module 1220 may complete the set key operation by setting keys for data encryption.

In operation S321, the storage module 1220 may generate a key protection key (KPK) using the received password. As an example, the Key Protection Key (KPK) may be used to encrypt and/or decrypt the actual key used to encrypt data.

In operation S322, the storage module 1220 may read a first key encryption key (KEK1) and/or a data encryption key (DEK) from the NVM 1222 in the storage module 1220. As an example, the first key encryption key (KEK1) may be used to encrypt, decrypt, wrap, or unwrap the data encryption key (DEK).

The data encryption key (DEK) may be used to encrypt, decrypt, wrap, or unwrap actual data (e.g. data stored in the storage module 1220 (e.g. payload data)). The storage module 1220 may decrypt or unwrap the data encryption key (DEK). The storage module 1220 may use the first key encryption key (KEK1) to decrypt or unwrap the data encryption key (DEK).

In operation S323, the storage module 1220 may generate a second key encryption key (KEK2). In operation S324, the storage module 1220 may encrypt or wrap the data encryption key (DEK) using the second key encryption key (KEK2). In operation S325, the storage module 1220 may encrypt or wrap the second key encryption key (KEK2) using the key protection key (KPK). In operation S326, the storage module 1220 may store the encrypted or wrapped data encryption key (DEK) and the encrypted or wrapped second key encryption key (KEK2).

Referring again to FIG. 15, when the set key operation is completed (YES) in operation S330, the storage module 1220 may save the set key (S340). When the set key is saved, the storage module 1220 may provide a success response to the smart key module 1210.

If the set key operation is not completed (NO), the storage module 1220 may cancel the set key operation (S350). When the set key operation is canceled, the storage module 1220 may provide a fail response to the smart key module 1210.

The smart key module 1210 may receive a success response or a fail response from the storage module 1220 and operate according to the response. In operation S314, the smart key module 1210 may check the result of the response. If the smart key module 1210 receives a fail response (NO), the password setting operation (S211) may be ended.

If the success response is received (YES), the smart key module 1210 may encrypt the password according to an algorithm such as a dynamically determined or, alternatively, a predetermined algorithm (S315). The algorithm may be input during the production process of the smart key module 1210. In one example, the algorithm may be an algorithm according to the Advanced Encryption Standard (AES); however, example embodiments are not limited thereto.

In operation S316, the smart key module 1210 may save the encrypted password in the key memory 1520. When the encrypted password is saved, the smart key module 1210 may end the password setting operation.

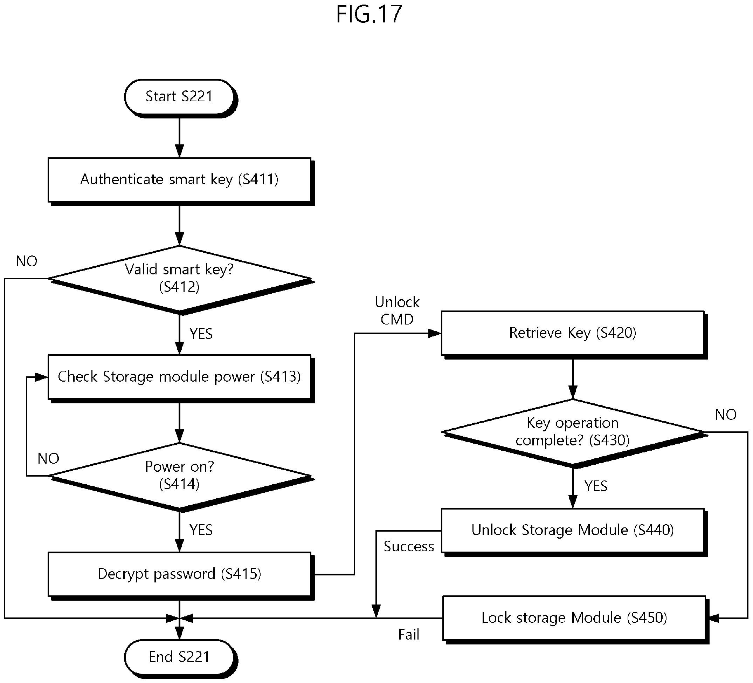

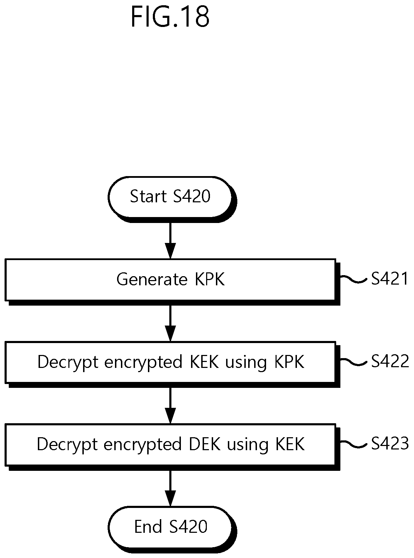

FIGS. 17 and 18 are flowcharts illustrating some example embodiments of the unlock operation shown in FIG. 14. The smart key module 1210 and the storage module 1220 may perform an unlock operation (S221) using the smart key 1100. Upon completing the unlock operation (S221), the state of the state machine may change from the lock state (S230) to the unlock state (S220).

Referring to FIG. 17, in operation S411, the smart key module 1210 may authenticate the validity of the smart key 1100. In operation S412, the smart key module 1210 may determine the validity of the smart key. If the smart key 1100 is not valid (NO), the smart key module 1210 may end the unlock operation (S221). If the smart key 1100 is valid (YES), the smart key module 1210 may perform operation S413.

In operation S413, the smart key module 1210 may check the power state of the storage module 1220. In operation S414, if the storage module 1220 is not in the power-on state (NO), the smart key module 1210 cannot use the data of the storage module 1220. The smart key module 1210 may repeat operation S413. If the storage module 1220 is in the power-on state (YES), the smart key module 1210 may perform operation S415.

In operation S415, the smart key module 1210 may decrypt the password using an algorithm such as a dynamically determined or predetermined algorithm. As an example, the predetermined algorithm may include an algorithm according to the Advanced Encryption Standard (AES); however, example embodiments are not limited thereto. The smart key module 1210 may provide the decrypted password and unlock command to the storage module 1220.

In operation S420, the storage module 1220 may receive a password and unlock command from the smart key module 1210. The storage module 1220 may perform a key retrieval operation. The storage module 1220 may generate a key for encryption and/or decryption by performing the key retrieval operation.

FIG. 18 is a flowchart illustrating the key retrieval operation shown in FIG. 17. Referring to FIG. 18, the storage module 1220 may perform the key retrieval operation (S420). In operation S421, the storage module 1220 may generate a key protection key (KPK). The storage module 1220 may use the password received from the smart key module 1210 to generate the key protection key (KPK).

In operation S422, the storage module (1220) may read the key encryption key (KEK). The key encryption key (KEK) may be read from the NVM 1222. The storage module 1220 may read the encrypted key encryption key (KEK). The storage module 1220 may decrypt the key encryption key (KEK). The storage module 1220 may use the key protection key (KPK) to decrypt the key encryption key (KEK).

In operation S423, the storage module 1220 may read the encrypted data encryption key (DEK). The storage module 1220 may decrypt the data encryption key (DEK). The storage module 1220 may use the decrypted key encryption key (KEK) to decrypt the data encryption key (DEK).

Referring again to FIG. 17, the storage module 1220 may check whether the key retrieval operation is completed (e.g. if the data encryption key DEK was successfully decrypted). In operation S430, if the key operation is not completed (NO), the storage module 1220 may maintain the lock state (S450). If the lock state is maintained, the storage module 1220 may provide a fail response to the smart key module 1210.

If the key operation is completed (YES), the storage module 1220 may release (e.g. unlock) the lock state (S440). When the lock state is released, the storage module 1220 may provide a success response to the smart key module 1210.

The smart key module 1210 may end the unlock operation when receiving a response. If a fail response is received, the smart key module 1210 cannot use the data of the storage module 1220. The smart key module 1210 may end the unlock operation when receiving the response.

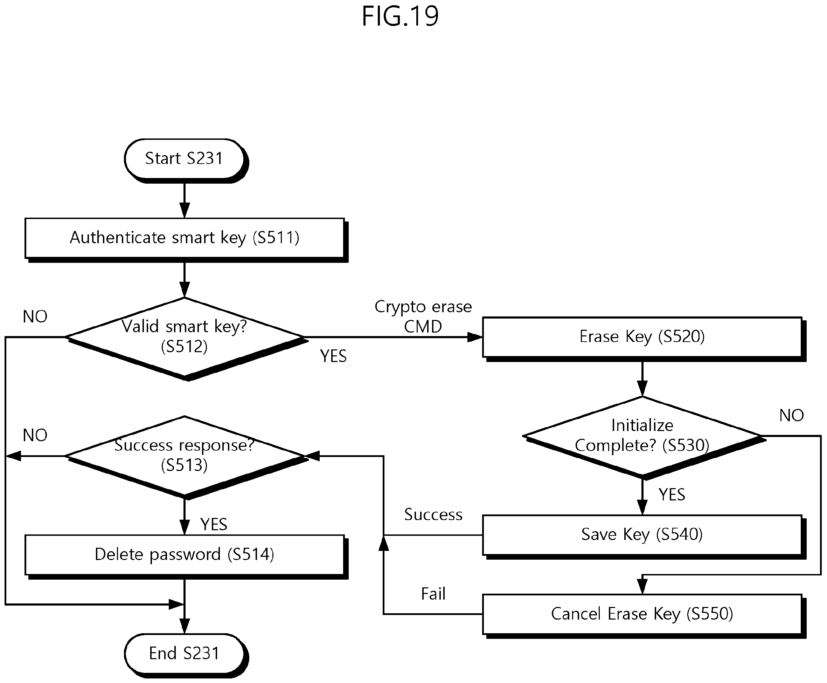

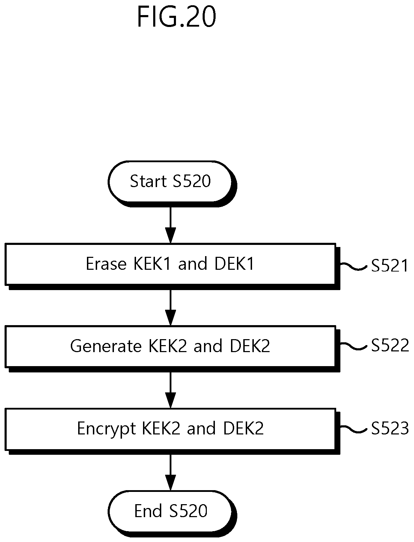

FIGS. 19 and 20 are flowcharts illustrating some example embodiments of the crypto erase operation shown in FIG. 14. The smart key module 1210 and the storage module 1220 may erase data using the crypto erase operation (S231). The crypto erase operation (S231) may be performed through a special operation. The smart key module 1210 and the storage module 1220 may perform the crypto erase operation using the smart key 1100.

Referring to FIG. 19, in operation S511, the smart key module 1210 may authenticate the validity of the smart key 1100. In operation S512, if the smart key 1100 is not valid (NO), the smart key module 1210 may end the crypto erase operation (S231). If the smart key 1100 is valid (YES), the smart key module 1210 may perform a key erase operation (S520).

FIG. 20 is a flowchart illustrating some example embodiments of the erase key operation shown in FIG. 19. Referring to FIG. 20, the storage module 1220 may perform the erase key operation (S520).

In operation S520, the storage module 1220 may receive the crypto erase command from the smart key module 1210. The storage module 1220 may perform the crypto erase operation. When performing a crypto erase operation, the storage module 1220 may erase an old key and create a new key.

In operation S521, the storage module 1220 may erase the first key encryption key (KEK1) and the first data encryption key (DEK1) from the NVM 1222.

In operation S522, the storage module 1220 may generate a second key encryption key (KEK2) and a second data encryption key (DEK2). In operation S523, the storage module 1220 may encrypt or wrap the second key encryption key (KEK2) and the second data encryption key (DEK2).

Referring again to FIG. 20, in operation S530, an initial operation may be performed. If the initial operation is not completed (NO), the storage module 1220 may cancel the erase key operation (S550). If the erase key is canceled, a fail response may be provided to the smart key module 1210.

In operation S530, if initialization is completed (YES), the storage module 1220 may save the generated key (S540). When the generated key is stored, the storage module 1220 may provide a success response to the smart key module 1210.

In operation S513, the smart key module 1210 may receive a response from the storage module 1220. The smart key module 1210 may check the result of the response. Upon receiving the fail response (NO), the smart key module 1210 may end the crypto erase operation (S231). Upon receiving the success response (YES), the smart key module 1210 may delete the password (S514).

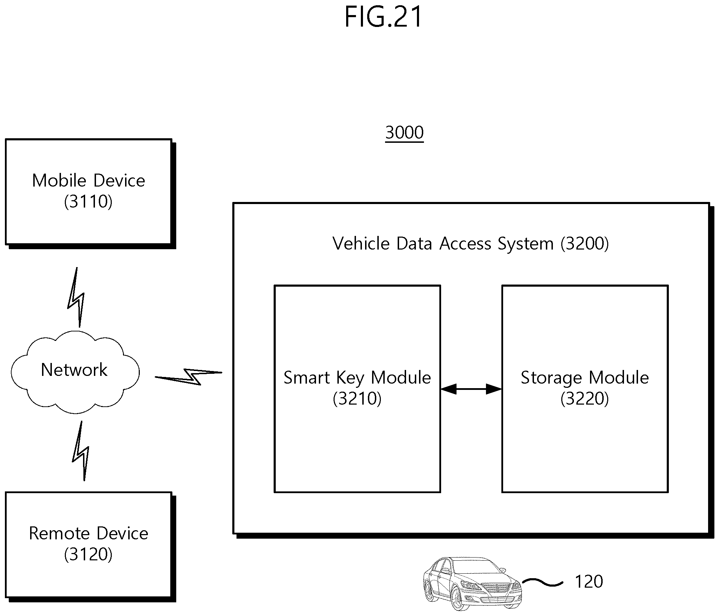

FIG. 21 is a conceptual diagram illustrating some example embodiments of the smart key shown in FIG. 3. Referring to FIG. 21, the vehicle control system 3000 may include smart keys (3110, 3120) and a vehicle data access system 3200. The vehicle data access system 2200 may include a smart key module 3210 and a storage module 3220.

The vehicle data access system 3200 may transmit and/or receive various types of smart keys through a network. The smart key may include a mobile device 3110 and/or a remote device 3120. The mobile device 3110 may install a dedicated firmware. A user may transmit data to a vehicle 120 at a short distance using the mobile device 3110. The mobile device 3110 may be a commonly used smartphone. The remote device 3120 may run a dedicated application or dedicated program. The user may control the vehicle 120 from a remote location using the remote device 3120.

The user may transmit data to the vehicle 120 using the mobile device 3110 and/or the remote device 3120. The mobile device 3110 and/or the remote device 3120 may provide an encrypted unique code to vehicle data access system 3200. The vehicle data access system 3200 may receive wireless signal information from the mobile device 3110 and/or the remote device 3120.

The vehicle data access system 3200 may manipulate the states of the vehicle 120 using wireless signal information. As an example, the vehicle data access system 3200 may manipulate one or more of the locking state of the car door, the starting state of the vehicle 120, the power-on state of the lights, and the opening and closing state of the trunk.

The smart key module 3210 may receive unique code information from the smart keys 3110 and 3120. The smart key module 3210 may authenticate the smart keys 3110 and 3120 using unique code information. When the smart key 3100 is authenticated, the smart key module 3210 may perform operations to control data access. Here, operations for controlling data access may include one or more of the password setting operation, the unlock operation, and the crypto erase operation.

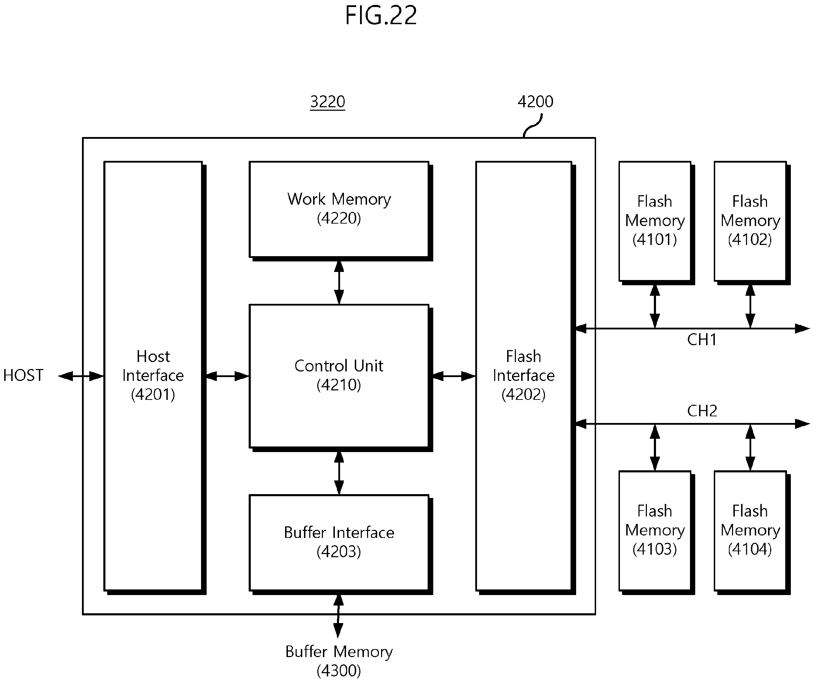

FIG. 22 is a block diagram illustrating an example of implementing a storage module (e.g. the storage module shown in any of FIGS. 2-9 and 21) as a solid state drive (SSD). Referring to FIG. 22, the storage module 3220 includes a plurality of flash memories 4101 to 4104 and an SSD controller 4200.

The first and second flash memories 4101 and 4102 may be connected to the SSD controller 4200 through the first channel (CH1). The third and fourth flash memories 4103 and 4104 may be connected to the SSD controller 4200 through the second channel (CH2). The number of channels connected to the SSD controller 4200 may be more than two. And the number of flash memories connected to one channel may be more than two.

The SSD controller 4200 may include a host interface 4201, a flash interface 4202, a buffer interface 4203, a control unit 4210, and a work memory 4220. The SSD controller 4200 may be connected to the host through the host interface 4201. The SSD controller 4200 may write data to or read data from the flash memory according to the host's request. Here, the host may be a smart key module.

The SSD controller 4200 may be connected to a plurality of flash memories 4101 to 4104 through a flash interface 4202 and with the buffer memory 4300 through a buffer interface 4203. The flash interface 4202 may provide data temporarily stored in the buffer memory 4300 to the flash memory through the respective channels CH1 and CH2. In some example embodiments, the flash interface 4202 may transfer data read from the flash memories 4101 to 4104 to the buffer memory 4300.

The control unit 4210 may analyze and process signals input from the host. The control unit 4210 may control the smart key module 3210 or the flash memories 4101 to 4104 through the host interface 4201 or the flash interface 4202. The control unit 4210 may control the operation of the flash memories 4101 to 4104 according to firmware for driving the storage module 3220.

The SSD controller 4200 may manage data to be stored in flash memories 4101 to 4104. During a sudden power-off operation, the SSD controller 4200 may back up data stored in the work memory 4220 or the buffer memory 4300 to the flash memories 4101 to 4104.

According to various example embodiments, vehicle data generated by various modules in a vehicle may be stored and managed in one storage module. The management efficiency of vehicle data can be increased. According to some example embodiments, the security of vehicle data may be improved because vehicle data may be erased all at once in the case of vehicle sale or scrapping.

Embodiments are set out in the following Clauses:
Clause 1. A vehicle data access system comprising:
   a smart key module configured to receive a signal from a smart key, the signal associated with accessing vehicle data from a smart key;
   a vehicle control module configured to be associated with at least one of vehicle management and driving convenience; and
   a storage module configured to store the vehicle data generated by the vehicle control module and control access to the vehicle data according to control of the smart key module,
   wherein the smart key module is configured to allow access to the vehicle data of the vehicle control module, stored in the storage module through an authentication operation of the smart key.
Clause 2. The vehicle data access system of Clause 1,
   wherein the vehicle control module includes a vehicle internal module including at least one of a vehicle management module, an infotainment module, a driver assistance module, and a camera management module.
Clause 3. The vehicle data access system of Clause 1 or Clause 2,
   wherein the smart key module is configured to control the storage module to have any one of an initial state, a lock state, and an unlock state.
Clause 4. The vehicle data access system of Clause 3,
   wherein the smart key module is configured to change the storage module from the initial state to the unlock state through a password setting operation.
Clause 5. The vehicle data access system of Clause 3 or Clause 4,
   wherein the smart key module is configured to change the storage module from the lock state to the unlock state through an unlock operation.
Clause 6. The vehicle data access system of any of Clauses 3-5,
   wherein the smart key module is configure dot change the storage module from the lock state or the unlock state to the initial state through a crypto erase operation.
Clause 7. A vehicle data access system comprising:
   a smart key module configured to receive a signal from a smart key, the signal associated with accessing vehicle data; and
   a vehicle control module configured to be associated with at least one of vehicle management and driving convenience,
   wherein the smart key module allows is configured to allow access to vehicle data stored in the vehicle control module through an authentication operation of the smart key.
Clause 8. The vehicle data access system of Clause 7,
   wherein the vehicle control module includes a vehicle internal module including at least one of a vehicle management module, an infotainment module, a driver assistance module, and a camera management module.
Clause 9. The vehicle data access system of Clause 7 or Clause 8,
   wherein the smart key module is configured to have the vehicle control module to have any one of an initial state, a lock state, and an unlock state.
Clause 10. The vehicle data access system of any of Clauses 7-9,
   wherein the smart key includes a remote device configured to remotely communicate with the smart key module through a network.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

While various example embodiments have been described with reference to embodiments thereof, it will be apparent to those of ordinary skill in the art that various changes and modifications may be made thereto without departing from the scope of the present disclosure as set forth in the following claims. Example embodiments are not necessarily mutually exclusive. For example, some example embodiments may include one or more features described with reference to one or more figures and may also include one or more other features described with reference to one or more other figures.

## Claims

1. A vehicle data access system comprising:
a smart key module configured to receive a signal from a smart key, the signal associated with accessing vehicle data; and
a storage module configured to control access to the vehicle data according to the control of the smart key module,
wherein the smart key module is configured to allow access to the vehicle data stored in the storage module through an authentication operation of the smart key.

2. The vehicle data access system of claim 1,
wherein the storage module comprises,
a storage unit configured to store the vehicle data; and
a storage controller configured to control access to the storage unit.

3. The vehicle data access system of claim 2,
wherein the storage unit includes a non-volatile memory and is configured to store the vehicle data in the non-volatile memory.

4. The vehicle data access system of any preceding claim,
wherein the smart key module is configured to control the storage module to have any one of an initial state, a lock state, and an unlock state.

5. The vehicle data access system of claim 4,
wherein the smart key module is configured to change the storage module from the initial state to the unlock state through a password setting operation.

6. The vehicle data access system of claim 5, wherein
the smart key module is configured to provide a password setting command to the storage module upon authentication of the smart key being successful, and
the storage module is configured to provide a response signal to the smart key module in response to the password setting command.

7. The vehicle data access system of claim 6,
wherein upon the smart key module receiving a success response, the vehicle data access system is configured to encrypt the password according to an algorithm and store the encrypted password.

8. The vehicle data access system of any of claims 4-7,
wherein the smart key module is configured to change the storage module from the lock state to the unlock state through an unlock operation.

9. The vehicle data access system of claim 8, wherein
the smart key module is configured to provide an unlock command to the storage module when authentication of the smart key is successful, and
the storage module provides a success response or a fail response to the smart key module in response to the unlock command.

10. The vehicle data access system of any of claims 4-9,
wherein the smart key module is configured to change the storage module from the lock state or the unlock state to the initial state through a cryptographic erase operation.

11. The vehicle data access system according to any preceding claim, wherein:
the vehicle data access system further comprises a vehicle control module configured to be associated with at least one of vehicle management and driving convenience; and
the storage module is configured to store the vehicle data generated by the vehicle control module.

12. The vehicle data access system of claim 11,
wherein the vehicle control module includes a vehicle internal module including at least one of a vehicle management module, an infotainment module, a driver assistance module, and a camera management module.
